## Europäisches Patentamt
## European Patent Office
## Office européen des brevets

(19)

(11) Veröffentlichungsnummer: **0 063 746**
**A2**

(12)　**EUROPÄISCHE PATENTANMELDUNG**

(21) Anmeldenummer: **82103134.1**

(22) Anmeldetag: **14.04.82**

(51) Int. Cl.³: **H 01 M 10/39**

(30) Priorität: **23.04.81 DE 3116136**

(43) Veröffentlichungstag der Anmeldung: **03.11.82**
**Patentblatt 82/44**

(84) Benannte Vertragsstaaten: **BE FR GB IT NL**

(71) Anmelder: **BROWN, BOVERI & CIE Aktiengesellschaft, Kallstadter Strasse 1, D-6800 Mannheim 31 (DE)**

(72) Erfinder: **Knödler, Reinhard, Dr., Heinrich-Fuchs-Strasse 112, D-6900 Heidelberg (DE)**
Erfinder: **Mennicke, Stefan, Dr., Türkisweg 27, D-6906 Leimen-Gau (DE)**

(74) Vertreter: **Kempe, Wolfgang, Dr. et al, c/o Brown, Boveri & Cie AG Postfach 351, D-6800 Mannheim 1 (DE)**

(54) Wiederaufladbare galvanische Batterie.

(57) Wiederaufladbare galvanische Batterie mit flüssigem Natrium als negativem und flüssigem – in Graphit aufgesaugtem – Schwefel als positivem elektrochemischem Material sowie mit natriumionenleitenden Festelektrolyten, die in dem metallischen Gehäuse der Batterie als einseitig offene, Schwefel bzw. Natrium enthaltende Behälter ausgebildet sind und die jeweils einen Stromabnehmer aufweisen, wird weitergebildet, indem die Vorteile von «Normalzellen» und «Inverszellen» bei gleichzeitiger Verringerung ihrer Nachteile genutzt werden. Dies wird dadurch erreicht, daß die Batterie aus mindestens zwei nebeneinander angeordneten und über das Gehäuse in Serie geschalteten Einzelzellen, die zueinander eine inverse Anordnung des Schwefels und des Natriums aufweisen, besteht.

B R O W N , B O V E R I & C I E      AKTIENGESELLSCHAFT

Mannheim                              16. April 1981

Mp.-Nr. 537/81                        ZPT/P5-Je/Sk

## Wiederaufladbare galvanische Batterie

Die Erfindung betrifft eine wiederaufladbare galvanische Batterie mit flüssigem Natrium als negativem und flüssigem – in Graphit aufgesaugten – Schwefel als positivem elektrochemischen Material sowie mit natriumionenleitenden Festelektrolyten, die in dem metallischen Gehäuse der Batterie als einseitig offene, Schwefel bzw. Natrium enthaltende Behälter ausgebildet sind und die mindestens einen Stromabnehmer aufweisen.

Es ist bekannt, daß eine wiederaufladbare galvanische Batterie im wesentlichen aus geschmolzenem Natrium als einer, geschmolzenem Schwefel als der anderen Reaktionssubstanz bestehen kann, wobei die beiden Reaktionspartner durch ein Festelektrolytrohr getrennt sein können. Dieses Rohr besitzt bei der Arbeitstemperatur der Na/S-Zelle von 300 bis 350 Grad Celsius eine hohe Natriumionenleitfähigkeit. Schwefel ist in einem elektronisch leitenden Graphitfilz aufgesaugt. Er bildet die Fortsetzung des als positiven Stromanschluß dienenden Metallgehäuses und sorgt mit seiner großen Oberfläche dafür, daß die elektrochemischen Prozesse genügend schnell ablaufen. Als negativer Stromanschluß dient der über einen Metallstift mit dem Natrium in Kontakt stehende metallische Deckel. Bei der Entladung, – wenn die beiden Stromanschlüsse über eine Last miteinander verbunden werden – wandert Natrium als Ion durch das Elektrolytrohr zum Schwefel. Dabei reagieren die Natriumionen mit Schwefel unter Aufnahme von Elektronen zu Natriumpolysulfid. Im Laufe der Entladung wird also immer mehr Natrium aus dem Innenraum verbraucht, wodurch der Natriumpegel sinkt. Gleichzeitig wird immer mehr Natriumpolysulfid gebildet, wodurch der Pegel im Außenraum steigt. Die voll entladene Zelle enthält im Außenraum $Na_2S_3$ als Reaktionsprodukt.

Bei der Wiederaufladung der Zelle werden alle Vorgänge umgekehrt. Das Reaktionsprodukt $Na_2S_3$ wird zersetzt, die Natriumionen wandern durch den Festelektrolyten zurück in den Innenraum und Schwefel bleibt im Außenraum zurück. Die Betriebstemperatur der Na/S-Zelle liegt oberhalb der Schmelzpunkte von Natrium, Schwefel und der Natriumpolysulfide, daher sind die Reaktanden und Reaktionsprodukte flüssig. Auf diese Weise kann der für den Ablauf der elektrochemischen Reaktionen notwendige Kontakt zwischen Festelektrolyt und den Reaktanden dauernd aufrecht erhalten werden. Zur Aufrechterhaltung der Betriebstemperatur, die wesentlich oberhalb der Umgebungstemperatur liegt, werden bekannterweise eine größere Zahl von Zellen zu einer Batterie vereinigt und mit einer Wärmeisolation versehen.

Eine der wichtigsten Komponenten einer Na/S-Zelle ist der Festelektrolyt. Die Eignung von Beta-Aluminiumoxyd (Beta-$Al_2O_3$) als Elektrolyt für die besagten Zellen beruht auf seiner hohen Leitfähigkeit und Lebensdauer.

Im Prinzip gibt es zwei verschiedene Möglichkeiten, die aktiven Massen in der Zelle unterzubringen: entweder Natrium innerhalb (daher Schwefel außerhalb) oder Natrium außerhalb (daher Schwefel innerhalb) des Elektrolytrohres. Zellen bei denen das Natrium innerhalb des Elektrolytrohres angeordnet ist, werden gewöhnlich als "Normalzellen" und Zellen bei denen der Schwefel innerhalb des Elektrolyten angeordnet ist, werden als "Inverszellen" bezeichnet. Aus der unterschiedlichen Bauweise der Zellen ergeben sich spezifische Vor- und Nachteile. So kann z. B. das Zellgehäuse der Inverszelle aus einem einfachen und billigem Material hergestellt werden, andererseits muß jedoch der Elektrolytdurchmesser relativ groß sein, wodurch sich die spezifische Energie etwas erniedrigt. Bei der Normalzelle muß dagegen mit aufwendigen Gehäusematerialien gearbeitet werden, es können jedoch kleinere Rohre verwendet werden, was höhere Energiedichte bewirkt.

Batterien werden gewöhnlich aus Einzelzellen aufgebaut, wobei entweder Invers- oder Normalzellen bei der Ausbildung einer Batterie gebraucht werden.

Der Erfindung liegt die Aufgabe zugrunde, eine wiederaufladbare galvanische Batterie vorzuschlagen bei der durch die Kombination von Invers- und Normalzellen eine außerordentlich platz- und gewichtssparende Konstruktion erreicht werden kann.

537/81 − 4 − 0063746
16. 4. 1981

Die gestellte Aufgabe wird durch eine wiederaufladbare galvanische Batterie eingangs genannter Art erfindungsgemäß dadurch gelöst, daß die Batterie aus mindestens zwei nebeneinander angeordneten und über das Gehäuse in Serie geschalteten Einzelzellen, die zueinander eine inverse Anordnung des Schwefels und des Natriums aufweisen, bestehen.

Die Erfindung besteht im wesentlichen darin, daß eine Normal- und eine Inverszelle zu einer Doppelzelle (einfachste Ausführung der Erfindung) vereint werden.
Der Vorteil einer solchen Doppelzelle ist, daß infolge des verschiedenen Typs beide Einzelzellen direkt über das Gehäuse elektrisch miteinander verbunden werden können. Dadurch entfallen die bei gleichartigen Zellen benötigten dicken Verbindungsleisten. Neben einer Gewichtseinsparung bringt eine solche Anordnung wegen der kurzen Verbindungswege auch noch eine Verringerung des Innenwiderstandes mit sich.
Für die Funktionsfähigkeit einer Batterie ist es wichtig, daß sie aus Zellen mit möglichst einheitlichen Daten (vor allem Kapazität und Innenwiderstand) aufgebaut ist. Wenn sich die Daten zu stark unterscheiden, sind wegen der Verschaltung in der Batterie unerwünschte Rückwirkungen auf andere Zellen zu erwarten. Diese erforderliche Einheitlichkeit kann durch eine Weiterbildung der Erfindung dadurch erreicht werden, daß die Elektrolyte oder Inverszellen ein größeres inneres Volumen haben als die Elektrolyte der Normalzellen, wobei die Gehäusewandstärke und die Zell-Länge so aufeinander angepaßt sind, daß annähernd gleiche Kapazität und gleicher Innenwiderstand der Zellen erreicht wird. Hierbei kann die Normal- und Inverszelle in einem gemeinsamen Gehäuse angeordnet sein, wobei eine Trennung beider Zellen durch eine gemeinsame Trennwand hergestellt werden kann.

In allgemeiner Ausführung kann die Batterie aus mehreren, in einem gemeinsamen Gehäuse angeordneten Normal- und Inverszellen bestehen, wobei eine Serienschaltung der Einzelzellen durch elektrische Verbindung angrenzender und zueinander inversen Zellen erreicht werden kann.

Weitere Vorteile und Merkmale der Erfindung gehen aus der folgenden Darstellung weiterer Einzelheiten sowie aus den Figuren zweier Ausführungsformen der Erfindung hervor.

Hierbei zeigen:

Fig. 1     schematische eine Doppelzelle im Querschnitt,
Fig. 2     eine andere Ausführungsform der Doppelzelle im Querschnitt.

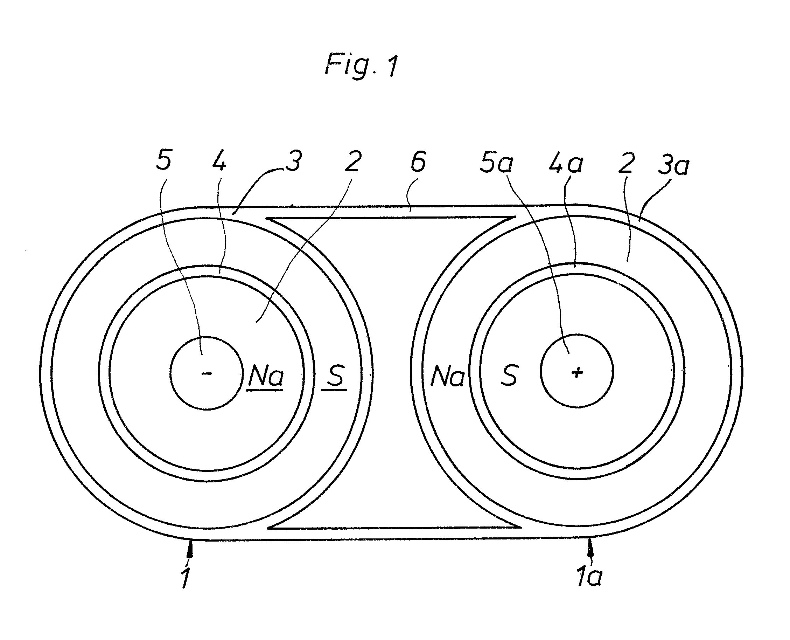

Die in Fig. 1 dargestellte Batterie besteht aus einer Normalzelle 1 und einer Inverszelle 1a, wobei eine elektische Verbindung zwischen den beiden Zellen 1, 1a über eine elektrische Verbindung 6, die mit den beiden Zellgehäusen 3, 3a verbunden ist, hergestellt. Die Normalzelle 1 bzw. die Inverszelle 1a besteht aus einem rohrartigen Zellgehäuse 3, 3a, in dem axial ein Elektrolyt 4 bzw. 4a aus Beta-$Al_2O_3$ angeordnet ist und der einen negativen Pol 5 bzw. einen positiven Pol 5a aufweist. Der Elektrolyt 4 bzw. 4a ist mit Natrium (Na) bzw. Schwefel (S) gefüllt. Zwischen dem Elektrolyten 4 bzw. 4a und dem Zellgehäuse 3 bzw. 3a ist Schwefel (S) bzw. Natrium (Na) angeordnet. Der Elektrolyt 4 hat ein kleineres inneres Volumen als der Elektrolyt 4a.

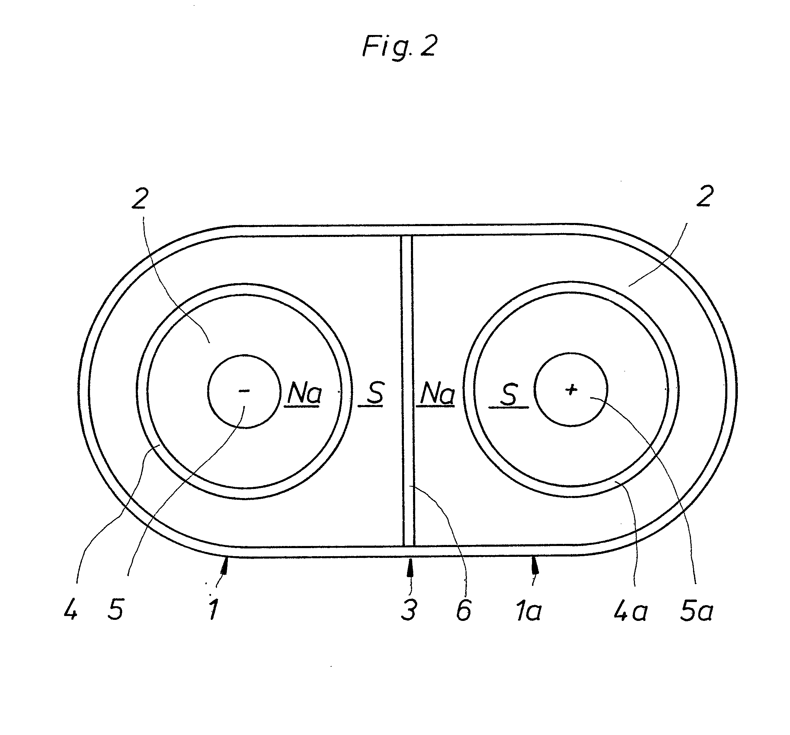

Aus der Fig. 2 ist zu entnehmen, daß die Normalzelle 1 und die Inverszelle 1a ein gemeinsames Zellgehäuse 3 aufweisen, wobei die Reaktanden der Zellen 1, 1a (Schwefel (S), Natrium (Na) ) voneinander durch eine Trennwand 6

getrennt sind. Hierbei ist das innere Volumen des Elektrolyten 4 bzw. 4a derart bemessen, daß die Kapazität und der Widerstand vergleichbar groß sind. Diese Ausführungsform hat den Vorteil eines geringeren Platzbedarfs.

537/81

0063746
16. 4. 1981
ZPT/P5-Je/Sk

A n s p r ü c h e

1. Wiederaufladbare galvanische Batterie mit flüssigem Natrium als negativem und flüssigem - in Graphit aufgesaugten - Schwefel als positivem elektrochemischen Material sowie mit natriumionenleitenden Festelektrolyten, die in dem metallischen Gehäuse der Batterie als einseitig offene, Schwefel bzw. Natrium enthaltende Behälter ausgebildet sind und die mindestens einen Stromabnehmer aufweisen, dadurch gekennzeichnet, daß die Batterie aus mindestens zwei nebeneinander angeordneten und über das Gehäuse (3) in Serie geschalteten Einzelzellen (1, 1a), die zueinander eine inverse Anordnung des Schwefels (S) und des Natrium (Na) aufweisen, besteht.

2. Wiederaufladbare galvanische Batterie nach Anspruch 1, dadurch gekennzeichnet, daß die Einzelzellen (1, 1a) gleiche Kapazitäten und Innenwiderstände haben.

3. Wiederaufladbare galvanische Batterie nach Anspruch 1 bis 2, dadurch gekennzeichnet, daß Elektrolyte (4), die Natrium (Na) enthalten, ein kleineres inneres Volumen haben als Elektrolyte (4a), die Schwefel (S) enthalten.

4. Wiederaufladbare galvanische Batterie nach Anspruch 1 bis 3, dadurch gekennzeichnet, daß die Einzelzellen (1, 1a) über eine Trennwand (6) voneinander getrennt sind.

Fig. 1

5   4   3   2   6   5a   4a   2   3a

—   Na   S   Na   S   +

1        1a

Fig. 2

2   2

−   Na   S   Na   S   +

4   5   1   3   6   1a   4a   5a